# EUROPEAN PATENT SPECIFICATION

(11) **EP 1 661 555 B1**
(45) Date of publication and mention of the grant of the patent: **18.04.2012**
(21) Application number: 05257340.9
(22) Date of filing: 29.11.2005
(51) Int. Cl.: C09K 8/512, C09K 8/60

(54) **Method of delaying the setting time of crosslinked lost circulation control pills**
Methode zur verzögerten Vernetzung von Spülungsverlustekontrollpillen
Méthode pour retarder la réticulation de bouchons de fluide de contrôle de pertes

(30) Priority: 29.11.2004 US 631527 P
(43) Date of publication of application: 31.05.2006
(73) Proprietor: Texas United Chemical Company, LLC., Houston, Texas 77056 (US)
(72) Inventor: Dobson, James W. Jr., Houston, Texas 77082 (US); Tresco, Kim O., Houston, Texas 77008 (US)
(74) Representative: Fisher, Adrian John

(56) References cited:
- US-A- 5 381 864
- US-A1- 2003 083 403
- US-A1- 2006 086 503
- US-B1- 6 342 467
- US-B2- 6 642 185

## Description

### Background of the Invention

The invention provides a means of delaying the setting time of lost circulation control pills containing one or more polymeric materials and a crosslinking agent/additive which reacts with and crosslinks the polymeric materials.

It is well known in the oil and gas drilling and servicing art to pump a lost circulation control pill in a wellbore to stop and prevent the loss of the drilling or servicing fluid to the surrounding subterranean formations being drilled.

Crosslinkable polymer-containing lost circulation control pills (hereinafter sometimes referred to as "CPCLCCP") are well known in the art. See for example: FLEX-PLUG™, a product of Halliburton Energy Services, Inc.; POLY-PLUG®; a product of M&D Industries; X-LINK®, a product of Baker Hughes Inteq; FORM-A-SET™, a product of M-I SWACO; PBS PLUG SYSTEM™, a product of Texas United Chemical Company, LLC. (dba TBC-BRINADD); and VEN-PLUG™, a product of Venture Chemicals, Inc. Such CPCLCCP contain one or more crosslinkable polymers and a crosslinking agent therefor. Properly formulated, the crosslinking of the crosslinkable polymer results in a CPCLCCP which increases in viscosity until the pill is "set" into a firm mass which may be pliable or semi-solid to solid. The set pills are generally referred to as "plugs" in the art as they plug the crevices, fractures, and other open spaces within the formation where lost circulation is occurring.

Crosslinkable polymer-containing fluids have been used in the oil and gas well drilling and servicing industry for many uses, particularly as formation fracturing fluids. In order to control the crosslinking time (time to complete the crosslinking of the polymer with the crosslinking agent), or the breaking time (time to decrease the viscosity of the fluid after it has performed its function) of the fluid, various components of the fluids have been encapsulated with a coating which temporarily decreases the solubility and/or reactivity of the components. See for example the following list of U.S. Patents in which the components encapsulated are given in parenthesis: 4,036,301 (cement accelerator); 4,362,566 (reaction initiator or accelerator); 4,664,816 (water absorbent polymer); 4,704,213 (oil absorbent polymer); 4,741,401 (breaker); 5,373,910 (breaker); 5,981,447 (breaker); 6,209,646 (liquid chemical additive); 6,387,986 (crosslinking agent); 6,422,314 (oxidizer or other breakers); 6,444,316 (water soluble chemicals); 6,494,263 (oxidizer or other breakers); 6,527,051 and 6,554,017 (water soluble chemicals including solid acid forming materials); 6,569,814 (ammonium persulfate oxidizer breaker); 6,642,185 (divalent cation releasing materials, i.e., calcium chloride); 6,667,279 (swelling agent); 6,702,044 (acid catalyst); 6,767,868 (breaker).

### Summary of the Invention

The present invention provides an improved crosslinkable polymer-containing lost circulation control pill and a method of delaying the time to crosslink or "set" the pill. A CPCLCCP is formulated to be fluid and pumpable when initially prepared. It is then pumped down a borehole to the formation where lost circulation is occurring. Ideally the crosslinking reaction of the polymer is controlled such that the pill increases in viscosity and becomes a semi-solid or gelled fluid upon entering the subterranean formation. Thereafter the crosslinking continues and a solid mass is obtained which fills the formation's cavities, pores, fractures, and the like thus preventing further loss of the borehole fluid to the formation.

The CPCLCCP comprises an aqueous liquid, a crosslinkable polymer visocosifier, one or more water retention additives, a crosslinking agent, a pH control agent, and an encapsulated sodium chloride crosslink time regulator.

The method of delaying the crosslink time of the CPCLCCP comprises adding to the CPCLCCP sodium chloride which has been encapsulated to provide a coating which regulates the solublization time of the sodium chloride in the aqueous phase of the CPCLCCP.

While the invention is susceptible to various modifications and alternative forms, specific embodiments thereof will hereinafter be described in detail and shown by way of example. It should be understood, however, that it is not intended to limit the invention to the particular forms disclosed, but, on the contrary, the invention is defined by the scope of the appended claims.

The compositions can comprise, consist essentially of, or consist of the stated materials. The method can comprise, consist essentially of, or consist of the stated steps with the stated materials.

### Detailed Description of the Invention

The CPCLCCP of the invention comprises:
(a) a crosslinkable polymer viscosifier;
(b) one or more water retention additives;
(c) a crosslinking agent;
(d) a pH control agent; and
(e) an encapsulated sodium chloride crosslink time regulator.

The crosslinkable polymer viscosifier in the CPCLCCP of the invention may be selected from any such polymers well known in the art. Representative polymers include various hydratable polysaccharides or polysaccharide derivatives such as guar gum, hydroxyalkylguar, hydroxyalkylcellulose, carboxyalkylhydroxyalkylguar, carboxyalkylhydroxyalkylcellulose, various other cellulose ethers, biopolymers, scleroglucan, succinoglucan, and the like.

The biopolymer viscosifier useful in the practice of this invention is preferably a xanthomonas gum (xanthan gum). Xanthomonas gum is available commercially. It is a widely used viscosifier and suspending agent in a variety of fluids, Xanthomonas gum can be made by the fermentation of carbohydrate with bacteria of the genus Xanthomonas. Representative of these bacteria are Xanthomonas campestris, Xanthomonas phaseoli, Xanthomonas mulvacearn, Xanthomonas carotoe, Xanthomonas traslucens, Xanthomonas hederae, and Xanthomonas papavericoli. The gum produced by the bacteria Xanthomonas campestris is preferred for the purpose of this invention. The fermentation usually involves inoculating a fermentable broth containing a carbohydrate, various minerals and a nitrogen yielding compound. A number of modifications in the fermentation procedure and subsequent processing are commercially used. Due to the variety of fermentation techniques and difference in processing operation subsequent to fermentation, different production lots of xanthomonas gum will have somewhat different solubility and viscosity properties. Xanthomonas gums useful in the practice of the present invention are relativel hydratable xanthomonas gums.

The colloid is a polymer containing mannose, glucose, glucuronic acid salts such as potassium glucuronate, sodium glucuronate, or the like, and acetyl radicals. Other Xanthomonas bacteria have been found which produce the hydrophilic gum and any of the xanthan gums and their derivatives can be used in this invention. Xanthan gum is a high molecular weight linear polysaccharide that is readily soluble in water to form a viscous fluid.

Other biopolymers prepared by the action of other bacteria, or fungi, on appropriate fermentation mediums may be used in the fluids of the present invention provided that they impart the desired synergistic thermally stable rheological characteristics thereto. This can be readily determined by one skilled in the art in accordance with the teachings of this specification.

The term "biopolymer" is intended to mean an excellular polysaccharide of high molecular weight, in excess of 200,000, produced by fermentation of a carbohydrate source by the action of bacteria or fungi. Representative microorganisms are the genus Xanthomonas, Pseudomonas, Agrobacterium, Arthrobacter, Rhizobium, Alcaligenes, Beijerincka, and Sclerotium. A succinoglucan type polysaccharide produced by microorganisms such as NCIB 11592 and NCIB 11883 is commercially available.

Xanthan gum is preferred.

The water retention additive is present in the CPCLCCP to prevent the pill from losing water and thus "drying out" before the crosslinkable polymer viscosifier has been fully crosslinked. Such "drying out" of the pill produces a non-cohesive, crumbly pill. Representative water retention additives are starch, starch derivatives, cellulose derivatives, hydrophilic polymers, and the like, such as hydroxyalkylstarch, carboxymethylstarch, hydroxyalkylcarboxymethylstarch, hydroxyalkylcellulose, carboxymethylcellulose, hydroxyethylcarboxymethylcellulose, other polysaccharides, polyvinyl alcohol, partially hydrolyzed polyacrylamides, and mixtures thereof.

Various crosslinkable polymer viscosifiers and polysaccharides and derivatives thereof which may be used as water retention additives are set forth in Dobson, Jr. et al. U.S. Patent No. 6,800,593.

The crosslinking agent of the invention is dependent upon the crosslinkable polymer viscosifier used in formulating the CPCLCCP as is well known in the art. The preferred crosslinking agents are hydrated borates of alkali metals and/or alkaline earth metals, such as sodium borates, calcium borates, and sodium calcium borates. Ulexite, NaCaB₅O₉•8H₂O, and probertite, NaCaB₅O₉•5H₂O, are representative hydrated alkali metal alkaline earth metal borates. Colemenite, Ca₂B₆O₁₁•5H₂O, is a representative alkaline earth metal borate. See for example Mondshine U.S. patent No. 4,619,776.

The pH control agent of the invention is preferably magnesium oxide.

The pH of the CPCLCCP must be at least 8 in order for the borate crosslinking of the crosslinkable polymer viscosifier to occur, preferably from about 8 to about 13, most preferably from about 9 to about 12.

The encapsulated sodium chloride crosslink time regulator (hereinafter sometimes referred to as "ESCCTR") of the invention is particulate sodium chloride which has been encapsulated with one or more coatings to decrease the rate of solublization of the sodium chloride.

Known methods and materials for encapsulating particulate water soluble materials can be used to encapsulate the particulate sodium chloride. See for example the following U.S. Patents: Walles et al. 4,741,401; Norman et al. 5,373,901; Markusch et al. 6,165,550; Moradi-Araghi et al. 6,387,986; and Reddy et al. 6,444,316.

In order to more completely describe the invention, the following non-limiting examples are given. In these examples and this specification, the following abbreviations may be used: bbl = 42 gallon barrel; ppb = pounds per 42 gallon barrel; °F = degrees Fahrenheit; g = grams; mm = millimeter; hr = hours. All percentages are present by weight of the coated particulate sodium chloride (sodium chloride plus coating).

### Example 1

Lost circulation control pills were prepared containing 290.5 g (0.83 bbl equivalent) of fresh water, 100 g (ppb) of PBS PLUG 500, a mixture of xanthan biopolymer, pregelatinized corn starch, polyanionic cellulose, and sized borate salts available from TBC-Brinadd, Houston, Texas U.S.A., and 50 g (ppb) of PBS PLUG ACTIVATOR, a mixture of magnesium oxide and sodium chloride also available from TBC-Brinadd, Houston, Texas U.S.A.

The particulate sodium chloride in the PBS PLUG ACTIVATOR was coated with 0%, 12%, 16%, 20% or 24% by weight of a urethane coating by Fritz Industries, Inc.

The pills were dynamically aged at 66°C (150°F) by placing the pills in jars and hot rolling. The pills were visually observed after 1, 2, and 3 hours aging. The results observed are set forth in Table 1.

The results indicate that the encapsulation of the sodium chloride with the urethane increased the setting time of the pills. The setting time increased as the concentration of the urethane coating increased.

**Table 1**

| Visual Observations | | | | | |
|---|---|---|---|---|---|
| Dynamically Aged at 66°C (150°F) , 3 hours | | | | | |
| | 0% | 12% | 16% | 20% | 24% |
| Initial | Fluid | Fluid | Fluid | Fluid | Fluid |
| 1 hr | Set | Slow Pour | Slow Pour | Slow Pour | Slow Pour |
| 2 hr | Set | Slow Pour | Slow Pour | Slow Pour | Slow Pour |
| 3 hr | Set | ½ Set | ½ Set | ¼ Set | Slow Pour |

### Example 2

Lost circulation control pills were prepared as in Example 1. The pills were static aged at 66°C (150°F) for 19 hours, cooled to room temperature, and the hardness of the pills measured with a penetrometer. The data are set forth in Table 2.

### Example 3

Two lost circulation pills were prepared as in Example 1 with the particulate sodium chloride containing a coating of 24% by weight urethane. One pill was dynamically aged at 66°C (150°F) and visually observed after 1, 3, and 5 hours aging. The pill remained fluid throughout the testing. The other pill was static aged at 66°C (150°F) and the hardness of the pill was determined after 16 hours and 80 hours aging. The penetrometer readings were 32 mm and 23 mm, respectively.

**Table 2**

| Penetrometer Readings, mm | | | | |
|---|---|---|---|---|
| Stated Aged at 66°C (150°F) , 19 hours | | | | |
| 0% | 12% | 16% | 20% | 24% |
| 7 | 19 | 10 | 15 | 17 |

## Claims

1. A method of delaying the setting time of aqueous crosslinked lost circulation control pills wherein the pills contain a crosslinkable polymer viscosifier, one or more water retention additives, a crosslinking agent, a pH control agent, and a crosslink time regulator which comprises utilizing as the crosslink time regulator encapsulated sodium chloride.

2. The method of claim 1 wherein the crosslinkable polymer viscosifier is xanthan gum.

3. The method of claim 1 wherein the crosslinkable polymer viscosifier is selected from the group consisting of guar gum, hydroxyalkylguar, carboxyalkylhydroxyalkylguar, hydroxyalkylcellulose, carboxyalkylhydroxyalkylcellulose, biopolymers, and mixtures thereof.

4. The method of claim 3 wherein the water retention additive is selected from the group consisting of starch, starch derivatives, cellulose derivatives, hydrophilic polymers, and mixtures thereof.

5. The method of claim 3 wherein the water retention additive is selected from the group consisting of starch, hydroxyalkylstarch, carboxymethyl starch, carboxymethylhydroxyethylstarch, hydroxyethyl cellulose, carboxymethylcellulose, carboxymethylhydroxyethylcellulose, polyvinyl alcohol, partially hydrolyzed polyacrylamides, and mixtures thereof.

6. The method of claim 1 wherein the crosslinking agent is a hydrated borate selected from the group consisting of sodium borates, calcium borates, sodium calcium borates, and mixtures thereof.

7. The method of claim 1 wherein the pH control agent is magnesium oxide.

8. The method of claim 1, 2, 3, 4, 5, 6, or 7 wherein the sodium chloride is encapsulated with a urethane coating.

9. The method of claim 3, 4, 5, 6, or 7 wherein the crosslinkable polymer is xanthan gum.

10. The method of claim 9 wherein the sodium chloride is encapsulated with a urethane coating.

## Patentansprüche

1. Verfahren zur Verzögerung der Erstarrungszeit von wässrigen vernetzten Lost-Circulation-Control-Pillen, wobei die Pillen ein vernetzbares Polymerverdickungsmittel, ein oder mehrere Wasserretentionsadditive, ein Vernetzungsmittel, ein den pH-Wert regulierendes Mittel und einen Vernetzungszeitregler enthalten, bei dem man als Vernetzungszeitregler verkapseltes Natriumchlorid verwendet.

2. Verfahren nach Anspruch 1, bei dem es sich bei dem vernetzbaren Polymerverdickungsmittel um Xanthan handelt.

3. Verfahren nach Anspruch 1, bei dem man das vernetzbare Polymerverdickungsmittel aus der Gruppe bestehend aus Guar-Gummi, Hydroxyalkylguar, Carboxyalkylhydroxyalkylguar, Hydroxyalkylcellulose, Carboxyalkylhydroxyalkylcellulose, Biopolymeren und Mischungen davon auswählt.

4. Verfahren nach Anspruch 3, bei dem man das Wasserretentionsadditiv aus der Gruppe bestehend aus Stärke, Stärkederivaten, Cellulosederivaten, hydrophilen Polymeren und Mischungen davon auswählt.

5. Verfahren nach Anspruch 3, bei dem man das Wasserretentionsadditiv aus der Gruppe bestehend aus Stärke, Hydroxyalkylstärke, Carboxymethylstärke, Carboxymethylhydroxyethylstärke, Hydroxyethylcellulose, Carboxymethylcellulose, Carboxymethylhydroxyethylcellulose, Polyvinylalkohol, teilhydrolysierten Polyacrylamiden und Mischungen davon auswählt.

6. Verfahren nach Anspruch 1, bei dem es sich bei dem Vernetzungsmittel um ein hydratisiertes Borat aus der Gruppe bestehend aus Natriumboraten, Calciumboraten, Natriumcalciumboraten und Mischungen davon handelt.

7. Verfahren nach Anspruch 1, bei dem es sich bei dem den pH-Wert regulierenden Mittel um Magnesiumoxid handelt.

8. Verfahren nach Anspruch 1, 2, 3, 4, 5, 6 oder 7, bei dem das Natriumchlorid mit einem Urethanüberzug verkapselt ist.

9. Verfahren nach Anspruch 3, 4, 5, 6 oder 7, bei dem es sich bei dem vernetzbaren Polymer um Xanthan handelt.

10. Verfahren nach Anspruch 9, bei dem das Natriumchlorid mit einem Urethanüberzug verkapselt ist.

## Revendications

1. Procédé de retardement du temps de prise de pilules de contrôle de perte de circulation réticulées aqueuses dans lequel les pilules contiennent un adjuvant de viscosité de polymère réticulable, un ou plusieurs additifs de rétention d'eau, un agent de réticulation, un agent de contrôle du pH, et un régulateur de temps de réticulation qui comprend l'utilisation en tant que régulateur de temps de réticulation de chlorure de sodium encapsulé.

2. Procédé de la revendication 1 dans lequel l'adjuvant de viscosité de polymère réticulable est la gomme xanthane.

3. Procédé de la revendication 1 dans lequel l'adjuvant de viscosité de polymère réticulable est choisi dans le groupe constitué de la gomme de guar, un hydroxyalkylguar, un carboxyalkylhydroxyalkylguar, une hydroxyalkylcellulose, une carboxyalkylhydroxyalkylcellulose, des biopolymères et des mélanges de ceux-ci.

4. Procédé de la revendication 3 dans lequel l'additif de rétention d'eau est choisi dans le groupe constitué de l'amidon, des dérivés d'amidon, des dérivés de cellulose, des polymères hydrophiles, et des mélanges de ceux-ci.

5. Procédé de la revendication 3 dans lequel l'additif de rétention d'eau est choisi dans le groupe constitué de l'amidon, un hydroxyalkylamidon, le carboxyméthylamidon, le carboxyméthylhydroxyéthylamidon, l'hydroxyéthylcellulose, la carboxyméthylcellulose, la carboxyméthylhydroxyéthylcellulose, l'alcool polyvinylique, des polyacrylamides partiellement hydrolysés, et des mélanges de ceux-ci.

6. Procédé de la revendication 1, dans lequel l'agent de réticulation est un borate hydraté choisi dans le groupe constitué de borates de sodium, borates de calcium, borates de sodium-calcium, et des mélanges de ceux-ci.

7. Procédé de la revendication 1, dans lequel l'agent de contrôle du pH est l'oxyde de magnésium.

8. Procédé de la revendication 1, 2, 3, 4, 5, 6, ou 7 dans lequel le chlorure de sodium est encapsulé avec un enrobage d'uréthane.

9. Procédé de la revendication 3, 4, 5, 6 ou 7 dans lequel le polymère réticulable est la gomme xanthane.

10. Procédé de la revendication 9 dans lequel le chlorure de sodium est encapsulé avec un revêtement d'uréthane.
